Europäisches Patentamt

**European Patent Office**

**Office européen des brevets**

(11) Numéro de publication: **0 134 772**
**A1**

(12) **DEMANDE DE BREVET EUROPEEN**

(21) Numéro de dépôt: **84870099.3**

(22) Date de dépôt: **10.07.84**

(51) Int. Cl.⁴: **C 21 B 7/24**
**G 01 S 17/46**

(30) Priorité: **19.07.83 BE 6047850**

(43) Date de publication de la demande:
**20.03.85 Bulletin 85/12**

(84) Etats contractants désignés:
**AT DE FR GB IT LU NL**

(71) Demandeur: **CENTRE DE RECHERCHES METALLURGIQUES CENTRUM VOOR RESEARCH IN DE METALLURGIE Association sans but lucratif Vereniging zonder winstoogmerk Rue Montoyer, 47 B-1040 Bruxelles(BE)**

(72) Inventeur: **Pirlet, Robert**
**32, Avenue des Lauriers**
**B-4920 Embourg(BE)**

(72) Inventeur: **Franssen, Roger**
**2, rue de Hombourg**
**B-4670 Montzen(BE)**

(74) Mandataire: **Lacasse, Lucien Emile et al,**
**CENTRE DE RECHERCHES METALLURGIQUES Abbaye du Val-Benoît 11, rue Ernest Solvay**
**B-4000 Liège(BE)**

(54) Procédé de mesure de la carte topographique de la charge d'un four à cuve.

(57) Procédé de mesure de la carte topographique de la charge d'un four à cuve, consistant à diriger un faisceau lumineux incident discontinu vers la surface de la charge, à scruter successivement des points distincts de la dite surface, de façon à repérer le point d'incidence du faisceau lumineux incident, la direction de ce dernier étant maintenue fixe au moins jusqu'au moment où l'on repère son point d'incidence sur la charge, à déterminer par triangulation optique le niveau du dit point d'incidence, à répéter ces opérations en plusieurs points de la surface de la charge et à en déduire la carte topographique de la charge.

- 1 -

## Procédé de mesure de la carte topographique de la charge d'un four à cuve.

La présente invention concerne un procédé pour la mesure de la carte topographique de la charge d'un four à cuve, en particulier d'un haut fourneau.

Par carte topographique au sens de la présente invention, on entend la carte de la surface supérieure de la charge du four par rapport à un plan horizontal de référence.

Les gueulards modernes, en particulier ceux qui sont équipés de trémies de chargement rotatives, offrent de nombreuses possibilités de distribution des matières constituant la charge du four. On peut dès lors choisir, parmi ces possibilités, celle qui est la plus appropriée dans chaque cas particulier, en fonction notamment de la nature des matières à enfourner ou du type de lit de fusion à réaliser.

Il convient cependant de pouvoir contrôler la conformité de la carte topographique réelle de la charge par rapport à la carte choisie pour les raisons indiquées plus haut.

La connaissance de la carte topographique réelle de la charge est très importante, car elle permet d'orienter le programme de chargement, de façon notamment à améliorer la régularité de marche du four à cuve et à uniformiser l'usure des réfractaires.

On a déjà proposé notamment dans le brevet belge n° 874.960, un procédé de télémétrie par triangulation optique permettant de relever le profil topographique de la charge contenue dans une enceinte, par un balayage continu de la surface de cette charge selon un plan déterminé.

Ce procédé continu, qui présente un intérêt incontestable pour de nombreuses applications, se heurte toutefois à deux inconvénients majeurs lorsque l'on désire l'appliquer au four à cuve. Ces deux inconvénients sont la faible réflexion de la lumière sur la charge et l'absorption élevée de la lumière par l'atmosphère régnant au-dessus de la charge. Ces deux phénomènes ne permettent pas d'obtenir l'intensité lumineuse de rayonnement nécessaire à la triangulation optique.

La présente invention a pour objet un procédé permettant d'échapper à ces deux inconvénients en utilisant un faisceau lumineux pulsé.

Le procédé qui fait l'objet de la présente invention, dans lequel on balaye la surface supérieure de la charge au moyen d' un faisceau lumineux et on capte le faisceau lumineux réfléchi par la dite charge, est essentiellement caractérisé en ce que l'on dirige un faisceau lumineux incident discontinu vers la dite surface de la charge, en ce que l'on scrute par pas successifs des points distincts de la dite surface, de façon à repérer le point d'incidence du dit faisceau lumineux incident, la direction du dit faisceau lumineux incident étant maintenue fixe au moins jusqu'au moment où l'on repère le dit point d'incidence, en ce que l'on détermine par triangulation optique le niveau du dit point d'incidence, en ce que l'on répète ces opérations en plusieurs points de la dite surface et en ce que l'on en déduit la carte topographique de la dite charge.

Selon une modalité particulière de mise en oeuvre du procédé de l'invention, on balaye la surface de la charge, selon une trajectoire prédéterminée, au moyen du dit faisceau lumineux discontinu, on scrute par pas successifs des points distincts de la dite trajectoire de façon à repérer le point d'incidence du dit faisceau lumineux incident, la direction du dit faisceau lumineux incident étant maintenue fixe au moins jusqu'au moment où l'on repère le dit point d'incidence, on détermine par triangulation optique le niveau du dit point d'incidence, on répète ces opérations en plusieurs points de la dite trajectoire et on en déduit le profil topographique de la charge le long de la dite trajectoire.

Cette modalité s'applique avantageusement dans les cas où la connaissance du profil topographique selon une trajectoire particulière, par exemple un diamètre ou une spirale, permet de déterminer avec une précision suffisante la totalité de la carte topographique.

Il ne sortirait évidemment pas du cadre de la présente invention, de déterminer le profil topographique selon plusieurs trajectoires prédéterminées, afin d'obtenir une image plus représentative de la surface réelle de la charge.

Selon une mise en oeuvre intéressante du procédé de l'invention, on utilise comme faisceau incident un faisceau lumineux pulsé et on scrute par pas successifs les dits points distincts de la surface à une cadence liée à la fréquence de pulsation du dit faisceau lumineux incident, chaque période de scrutation entre deux pas successifs correspondant temporellement à au moins une impulsion du dit faisceau lumineux incident.

Le procédé de l'invention est basé sur la constatation faite par le Demandeur, selon laquelle le degré d'atténuation d'une impulsion lumineuse par l'atmosphère régnant au-dessus de la charge dépendait non seulement de l'intensité, mais également de la longueur d'onde de la lumière émise.

Dans la pratique, on peut mettre en oeuvre le procédé de l'invention, en utilisant comme émetteur par exemple un laser que l'on oriente selon une direction prédéterminée par rapport à une direction de référence. On capte l'impulsion réfléchie par la charge au moyen d'un récepteur à champ de visée étroit, orientable pas à pas, avec lequel on vise successivement plusieurs points de la trajectoire connue balayée par le faisceau laser incident. Lorsque le récepteur capte une impulsion réfléchie par la charge, on relève la position angulaire du faisceau incident et du récepteur et on détermine par triangulation optique le niveau du point correspondant de la surface de la charge. On modifie alors l'orientation de l'émetteur et on répète les opérations qui viennent d'être décrites.

REVENDICATIONS.

1. Procédé de mesure de la carte topographique de la charge d'un four à cuve, en particulier d'un haut fourneau, dans lequel on balaye la surface supérieure de la charge au moyen d'un faisceau lumineux et on capte le faisceau lumineux réfléchi par la dite charge, caractérisé en ce que l'on dirige un faisceau lumineux incident discontinu vers la dite surface de la charge, en ce que l'on scrute successivement des points distincts de la dite surface de façon à repérer le point d'incidence du dit faisceau lumineux incident, la direction du dit faisceau lumineux incident étant maintenue fixe au moins jusqu'au moment où l'on repère le dit point d'incidence, en ce que l'on détermine par triangulation optique le niveau du dit point d'incidence, en ce que l'on répète ces opérations en plusieurs points de la dite surface et en ce que l'on en déduit la carte topographique de la dite charge.

2. Procédé suivant la revendication 1, caractérisé en ce que l'on balaye la surface de la charge, selon au moins une trajectoire prédéterminée, au moyen du dit faisceau lumineux discontinu, en ce que l'on scrute par pas successifs des points distincts de la dite trajectoire, de façon à repérer le point d'incidence du dit faisceau lumineux incident, la direction du dit faisceau lumineux incident étant maintenue fixe au moins jusqu'au moment où l'on repère le dit point d'incidence, en ce que l'on détermine par triangulation optique le niveau du dit point d'incidence, en ce que l'on répète ces opérations en plusieurs points de la dite trajectoire et en ce que l'on en déduit le profil topographique de la charge le long de la dite trajectoire.

3. Procédé suivant l'une ou l'autre revendication 1 et 2, caractérisé en ce que l'on utilise comme faisceau lumineux incident un faisceau lumineux pulsé et en ce que l'on scrute par pas successifs les dits points distincts de la surface à une cadence liée à la fréquence de pulsation du dit faisceau lumineux incident, chaque période de scrutation entre deux pas successifs correspondant temporellement à au moins une impulsion du dit faisceau lumineux incident.

4. Procédé suivant l'une ou l'autre des revendications 1 à 3, caractérisé en ce que le dit faisceau lumineux incident est un faisceau laser.

**Office européen des brevets**

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | GB-A-1 450 577 (BRITISH GAS CORP.) <br> * Revendications 1-8; page 2, lignes 35-38, 57-60, 88-96; figures 1,2 * | 1-4 | C 21 B 7/24 <br> G 01 S 17/46 |
| X | INTERNATIONAL JOURNAL OF ROBOTICS RESEARCH, vol. 2, no. 1, printemps 1983, pages 39-49, Cambridge, Massachusetts, USA; F.J. PIPITONE et al.: "A wide-field scanning triangulation rangefinder for machine vision" <br> * Pages 40,41, point 2 * | 1-4 | |
| Y | FR-A-2 020 300 (C.N.R.M.) <br> * Revendications 1,2; figure 1 * | 1 | DOMAINES TECHNIQUES RECHERCHES (Int. Cl.4) |
| Y | FR-A-2 506 329 (IRSID) <br> * Revendications 1-7; figures 1,2; page 1, lignes 34-39; page 7, lignes 26-32 * | 1 | C 21 B <br> G 01 S |
| A | DE-A-1 946 864 (SIEMENS) <br> * Figure 1; revendications 1-6; page 4, alinéa 2 * | 1-4 | |
| A | FR-A-2 327 513 (COMPAGNIE INDUSTRIE DES LASERS) <br> * Revendications 1-11; figures 1,2 * | 1-4 | |
| | --- -/- | | |

Le présent rapport de recherche a été établi pour toutes les revendications

| Lieu de la recherche <br> LA HAYE | Date d'achèvement de la recherche <br> 06-11-1984 | Examinateur <br> ELSEN D.B.A. |
|---|---|---|

**Office européen des brevets**

**RAPPORT DE RECHERCHE EUROPEENNE**

| | DOCUMENTS CONSIDERES COMME PERTINENTS | | Page 2 |
|---|---|---|---|

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-1 597 621 (ATLAS COPCO) <br> * Résumé; figure 1 * | 1-4 | |
| A | US-A-3 198 952 (T.A. BENHAM) <br> * Revendication 1 * | 1,4 | |

DOMAINES TECHNIQUES RECHERCHES (Int. Cl.4)

Le présent rapport de recherche a été établi pour toutes les revendications

| Lieu de la recherche <br> LA HAYE | Date d'achèvement de la recherche <br> 06-11-1984 | Examinateur <br> ELSEN D.B.A. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82